# EUROPÄISCHE PATENTSCHRIFT

(11) **EP 0 450 535 B1**
(45) Veröffentlichungstag und Bekanntmachung des Hinweises auf die Patenterteilung: **02.02.1994**
(21) Anmeldenummer: 91105086.2
(22) Anmeldetag: 28.03.1991
(51) Int. Cl.: F16K 11/044

(54) **Umstellventil mit selbsttätiger Rückstellung**
Self-reset diverter valve
Robinet déviateur à retour automatique

(30) Priorität: 06.04.1990 CH 1179/90
(43) Veröffentlichungstag der Anmeldung: 09.10.1991
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- EP-A- 0 120 318
- DD-U- 1 396
- DE-A- 2 213 827
- DE-A- 2 455 417
- GB-A- 2 042 129

## Beschreibung

Die Erfindung bezieht sich auf ein Umstellventil der im Oberbegriff des Anspruchs 1 genannten Art sowie auf eine Verwendung eines solchen Ventils für Mischarmaturen an Badewannen nach Anspruch 10.

Ein solches mit einer Badewannen-Mischarmatur zusammengebautes Umstellventil ist aus der DE-A-2 455 417 bekannt und wird durch einen Zugknopf betätigt. Dadurch lässt sich der Wasserstrom von dem in die Badewanne gerichteten Wannenauslauf auf die Dusche umstellen. Ein durch den Wasserstrom erzeugter Staudruck bewirkt eine Selbsthaltung des Umstellventils in Stellung "Dusche". Wird der Wasserstrom unterbrochen, sorgt eine Rückstellfeder für die selbsttätige Rückstellung in Stellung "Wanne".

Nach dem Gebrauch der Dusche bleibt in deren Zuleitung Wasser stehen, welches einen Nährboden für Krankheitserreger wie z.B. Mikroben und Bakterien bilden kann. Da es sich häufig um warmes Wasser handelt und zudem die Raumtemperatur in einem Badezimmer in der Regel relativ hoch ist, wird die Vermehrung dieser Krankheitserreger noch begünstigt.

Im Zusammenhang mit dem Auftreten der Legionärskrankheit wurde beobachtet, dass sich deren Erreger (Legionella pneumophilia) in stehendem Wasser extrem stark vermehren. Eine Infektion mit diesem Krankheitserreger erfolgt insbesondere durch Einatmen von legionellenhaltigem Aerosol. Demzufolge ist das Infektionsrisiko beim Duschen besonders gross, da der Duschvorgang die Aerosolbildung begünstigt.

Der Erfindung liegt die Aufgabe zugrunde, insbesondere bei umstellbaren Sanitärinstallationen zu verhindern, dass sich in vorübergehend nicht benutzten Leitungsteilen Krankheitserreger vermehren. Ferner soll ein Umstellventil insbesondere zur Verwendung in Duschenanlagen geschaffen werden.

Die gestellte Aufgabe wird erfindungsgemäss durch die Merkmale des Anspruchs 1 und durch die Merkmale des Anspruchs 10 gelöst.

Der Erfindung liegt die Erkenntnis zugrunde, dass sich die Vermehrung von Krankheitserregern praktisch verhindern lässt, wenn vorübergehend unbenutzte Leitungsteile von stehendem Wasser freigehalten werden. Durch das kennzeichnende Merkmal des Anspruchs 1 sind die beiden Ausläufe in der Ruhestellung gegeneinander offen, so dass sich eine dem einen Auslauf zugeordnete höher gelegene Leitung, zum Beispiel eine Duschenleitung, über den anderen Auslauf selbsttätig nach jeder Benutzung entleeren kann.

Die selbsttätige Entleerung weist bei einer Duschen-Sanitärinstallation zudem noch den Vorteil auf, dass der duschenden Person nach dem Umstellen auf Stellung "Dusche" sofort Wasser mit der zuvor in Stellung "Wanne" eingestellten Temperatur zugeführt wird, anstelle wie bisher zuerst kaltes abgestandenes Wasser aus dem Duschenrohr oder Duschenschlauch.

Ein weiterer Vorteil ist die Vermeidung eines langandauernden Tropfvorganges nach beendeter Wasserzufuhr bei undichtem Umstellventil.

Bei einer Ausführungsform nach Anspruch 2 ist gewährleistet, dass das Ventilglied bei zugeführtem Wasser durch den auf dieses einwirkenden Staudruck in Richtung des näherliegenden Ventilsitzes bewegt wird. Dieser Ventilsitz soll dem Duschenauslauf zugeordnet werden, um diesen selbsttätig zu schliessen, so dass das Wasser zuerst in die Wanne geleitet wird.

Anspruch 3 bezieht sich auf eine bevorzugte Abmessung eines die Ruhestellung definierenden Ringspaltes.

Anspruch 4 beschreibt eine Alternative zu einer Ausführung mit einem einzigen, doppelseitig wirkenden Ventilglied.

Anspruch 5 gibt eine bevorzugte Ausführungsform an. Daneben ist es auch möglich, mit anderen Mitteln eine Rückstellung zu bewirken, zum Beispiel mit Gummielementen, Membranen oder durch andere Ausgleichsmittel.

Bei einer Ausführungsform nach Anspruch 6 erfolgt die Rückstellung in eine durch einen Gleichgewichtszustand zwischen den beiden Federn definierte Ruhestellung

Neben der bevorzugten Ausführungsform nach Anspruch 7 ist es auch möglich, auf Zug beanspruchte Schraubenfedern oder in entsprechender Anordnung auch mindestens eine Blattfeder einzusetzen.

Eine Ausführungsform nach Anspruch 8 ist besonders bei einer Ergänzung eines für eine Duscheninstallation bestimmten Umstellventils bekannter Bauart vorteilhaft, um weitgehend vorhandene Bauteile verwenden zu können. Die stärkere Feder ist dabei die bereits vorhandene Rückstellfeder, welche allein verwendet, bei nicht vorhandenem Staudruck den Duschenauslauf schliessen würde. Die zweite, schwächere Feder wirkt der ersten entgegen, so dass das Ventilglied den dem Duschenauslauf zugeordneten Zweiten Ventilsitz in drucklosem Zustand offenhält.

Nach Anspruch 9 lässt sich die Ruhestellung des Ventilgliedes zur Erhöhung der Genauigkeit oder zur Beseitigung von Toleranzen einstellen.

Anhand der Zeichnungen wird ein Ausführungsbeispiel der Erfindung näher erläutert. Es zeigt:
- Fig. 1: eine Schnittansicht einer mit einem Umstellventil zusammengebauten Mischarmatur, insbesondere für eine für Badewannen bestimmte Sanitärinstallation und
- Fig. 2: eine Schnittansicht des Umstellventils nach der Fig. 1 in einem grösseren Massstab.

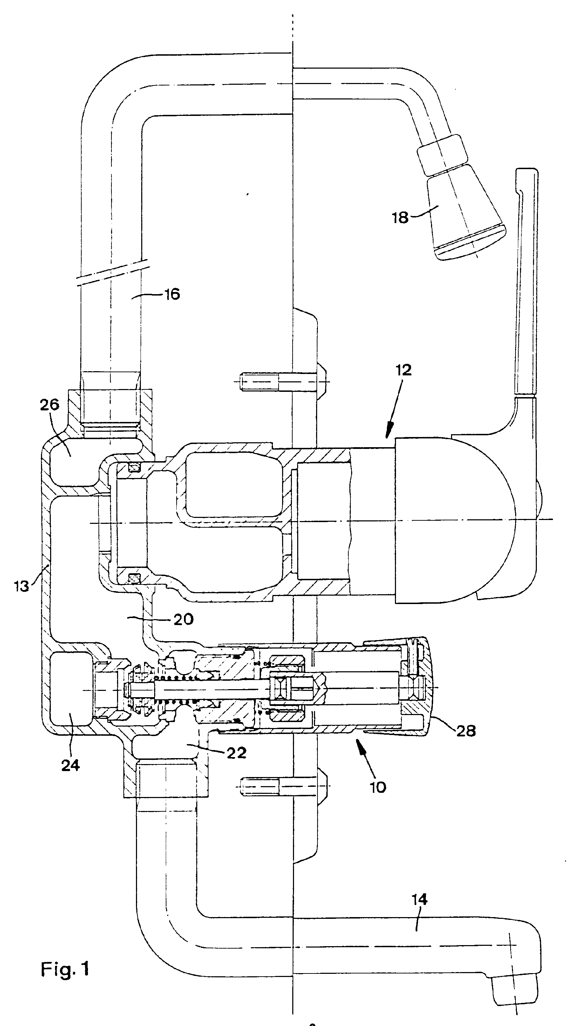

In der Fig. 1 ist eine mit einem Umstellventil **10** zusammengebaute Einhebel-Mischarmatur **12** bekannter Bauart in einem Gehäuse **13** dargestellt, an welches ein Badewannen-Auslaufstück **14** und über eine Rohrleitung **16** eine Dusche **18** angeschlossen sind. Dem Umstellventil **10** wird Kalt-Warmwasser-Gemisch von der Mischarmatur **12** über eine Zuflusskammer **20** zugeführt. Je nach Stellung des Umstellventils **10** erfolgt die Weiterleitung entweder über den dem Wannenauslauf zugeordneten ersten Auslauf **22** oder über den dem Duschenauslauf zugeordneten zweiten Auslauf **24**, der über eine Kammer **26** mit der Rohrleitung **16** verbunden ist.

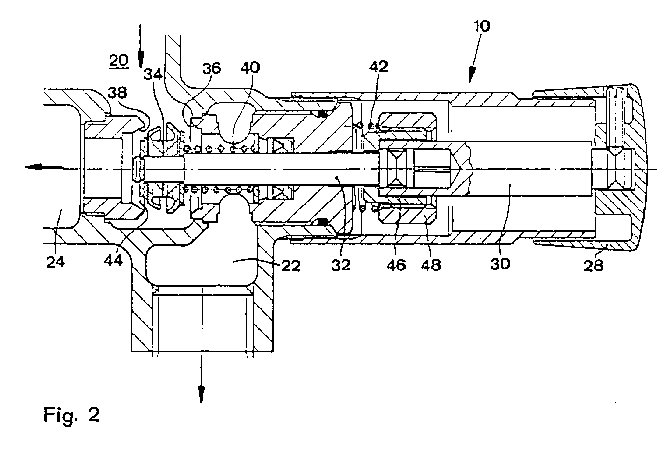

Gemäss Fig. 2 weist das Umstellventil **10** nach der Fig. 1 einen als Betätigungselement dienenden Zugknopf **28** auf, der über eine Verlängerung **30** mit einem Stössel **32** verbunden ist. Der Stössel **32** trägt an seinem Ende eine Doppelmanschette als zweiseitig wirkendes Ventilglied **34**. Anstelle einer Doppelmanschette können auf dem Stössel **32** auch zwei getrennte Ventilkörper oder Ventilkegel angeordnet werden.

Das sich in der Zuflusskammer **20** befindende Ventilglied **34** kann durch Zusammenwirken mit einander gegenüberliegenden Ventilsitzen **36** und **38** entweder den Durchfluss zum Wannenauslauf **22** oder denjenigen zum Duschenauslauf **24** freigeben.

Die dargestellte Lage des Ventilgliedes **34** entspricht der Ruhezustellung, die sich in drucklosem Zustand, das heisst bei geschlossener Mischarmatur **12**, gemäss Fig. 1, selbsttätig einstellt.

Wird dem Umstellventil **10** durch Öffnen der Mischarmatur **12** über die Zuflusskammer **20** Wasser zugeführt, dann bewirkt der auf das Ventilglied **34** ausgeübte Staudruck, dass sich dieses in Richtung des links dargestellten zweiten Ventilsitzes **38** bewegt, um den Duschenauslauf **24** zu schliessen und den Wannenauslauf **22** vollständig freizugeben. Damit ist die Stellung "Wanne" als Ausgangsstellung eingestellt. Die einseitig gerichtete Wirkung des Staudruckes ergibt sich durch die einseitige Ruhestellung des Ventilgliedes **34**, die sich näher beim zweiten Ventilsitz **38** als beim ersten Ventilsitz **36** befindet. Diese Wirkung kann noch durch eine unterschiedliche Bemessung der beiden Seiten des Ventilgliedes **34** unterstützt werden. Im Ausführungsbeispiel weist die dem zweiten Ventilsitz **38** entgegengesetzte Seite des Ventilgliedes **34** eine grössere Angriffsfläche für den Staudruck auf als die Gegenseite.

Bei Betätigung des Zugknopfes **28** erfolgt die Umstellung des Wasserstromes vom Wannenauslauf **22** zum Duschenauslauf **24**. Die Wirkung des Staudruckes wechselt auf die gegenüberliegende Seite des Ventilgliedes **34** und bewirkt nun seine Selbsthaltung in der Stellung "Dusche".

Wird die Mischarmatur **12** geschlossen, nimmt das Ventilglied **34** durch den Wegfall des Staudruckes wieder die dargestellte Ruhestellung ein. Diese wird durch die gegeneinandergerichteten Wirkungen von zwei als Druckfedern dienenden Schraubenfedern **40** und **42** erzielt. Die erste Feder **40** dient zur Rückstellung des Ventilgliedes **34** in Richtung des zweiten Ventilsitzes **38**. Die Federcharakteristik der zweiten Feder **42** ist derart bemessen, dass sie der ersten Feder **40** nur so weit entgegenwirkt, bis das Ventilglied **34** vom zweiten Ventilsitz **38** etwa 1 mm abhebt. Der dadurch gebildete Ringspalt **44** ermöglicht nach jeder Benutzung eine selbsttätige Entleerung der Duschenleitung **24**, **26**, **16**, **18**.

Zum optimalen Abgleichen der Federcharakteristik lässt sich die zweite Feder **42** durch die an der Kupplungsstelle zwischen der Verlängerung **30** und dem Stössel **32** angeordneten Einstellmittel **46** und **48** einstellen.

## Patentansprüche

1. Umstellventil mit selbsttätiger Rückstellung, zum Umstellen eines über einen Zulauf (**20**) zugeführten strömenden Mediums von einem ersten (**22**) auf einen zweiten Auslauf (**24**), mit in einem Gehäuse (**13**) angeordneten Ventilglied (**34**), welches durch ein Betätigungselement (**28**) zwischen zwei den Ausläufen (**22**, **24**) zugeordneten Ventilsitzen (**36**, **38**) bewegbar und bei durch das strömende Medium verursachtem Staudruck in jeweils einer von zwei mit den Ventilsitzen (**36**, **38**) zusammenwirkenden Endstellungen gehalten ist, sowie mit Rückstellmitteln (**40**, **42**) zum Rückstellen des Ventilgliedes (**34**) bei ausbleibendem Staudruck in eine Ruhestellung, **dadurch gekennzeichnet,** dass die Rückstellmittel (**40**, **42**) derart ausgebildet sind, dass das Ventilglied (**34**) in der Ruhestellung eine von beiden Ventilsitzen (**36**, **38**) beabstandete Stellung einnimmt.

2. Umstellventil nach Anspruch 1, dadurch gekennzeichnet, dass die Ruhestellung des Ventilgliedes (**34**) dem dem zweiten Auslauf (**24**) zugeordneten Ventilsitz (**38**) näher liegt als jenem (**36**) des ersten Auslaufes (**22**).

3. Umstellventil nach Anspruch 2, dadurch gekennzeichnet, dass in der Ruhestellung zwischen dem Ventilglied (**34**) und dem dem zweiten Auslauf (**24**) zugeordneten Ventilsitz (**38**) ein Ringspalt (**44**) von etwa 1 mm gebildet ist.

4. Umstellventil nach einem der vorstehenden Ansprüche, dadurch gekennzeichnet, dass das Ventilglied (**34**) zwei auf einem gemeinsamen Stössel (**32**) angeordnete Ventilkörper oder Ventilkegel aufweist.

5. Umstellventil nach einem der vorstehenden Ansprüche, dadurch gekennzeichnet, dass die Rückstellmittel (**40**, **42**) mindestens eine Feder aufweisen.

6. Umstellventil nach Anspruch 5, dadurch gekennzeichnet, dass die Rückstellmittel (**40**, **42**) zwei gegeneinander wirkende Federn aufweisen.

7. Umstellventil nach Anspruch 6, dadurch gekennzeichnet, dass die Federn (**40**, **42**) auf Druck beanspruchte Schraubenfedern sind.

8. Umstellventil nach Anspruch 7, dadurch gekennzeichnet, dass die Federn (**40**, **42**) unterschiedliche Federcharakteristiken aufweisen.

9. Umstellventil nach einem der Ansprüche 6 bis 8, dadurch gekennzeichnet, dass die Charakteristik mindestens einer der Federn (**42**) durch Einstellmittel (**46**, **48**) einstellbar ist.

10. Verwendung des Umstellventils (**10**) nach einem der vorstehenden Ansprüche für Mischarmaturen an Badewannen, zum Umstellen des Wasserstromes zwischen Wannenauslauf (**22**) und Duschenauslauf (**24**).

## Claims

1. Changeover valve with automatic resetting, in order to change over a flowing medium, supplied via an inlet (20), from a first (22) to a second outlet (24), with a valve member (34) which is arranged in a housing (13), can be moved by an actuating element (28) between two valve seats (36, 38) assigned to the outlets (22, 24) and, by the impact pressure caused by the flowing medium, is held in one of two respective end positions interacting with the valve seats (36, 38), and with resetting means (40, 42) for resetting the valve member (34) into a rest position in the absence of impact pressure, characterized in that the resetting means (40, 42) are designed such that, in the rest position, the valve member (34) assumes a position which is spaced apart from the two valve seats (36, 38).

2. Changeover valve according to Claim 1, characterized in that the rest position of the valve member (34) is located nearer the valve seat (38) assigned to the second outlet (24) than that (36) of the first outlet (22).

3. Changeover valve according to Claim 2, characterized in that, in the rest position, an annular gap (44) of approximately 1 mm is formed between the valve member (34) and the valve seat (38) assigned to the second outlet (24).

4. Changeover valve according to one of the preceding claims, characterized in that the valve member (34) has two valve bodies or valve cones arranged on a common tappet (32).

5. Changeover valve according to one of the preceding claims, characterized in that the resetting means (40, 42) have at least one spring.

6. Changeover valve according to Claim 5, characterized in that the resetting means (40, 42) have two springs acting with respect to each other.

7. Changeover valve according to Claim 6, characterized in that the springs (40, 42) are helical springs which can be subjected to compression.

8. Changeover valve according to Claim 7, characterized in that the springs (40, 42) have different spring characteristics.

9. Changeover valve according to one of Claims 6 to 8, characterized in that the characteristic at least of one of the springs (42) can be adjusted by adjusting means (46, 48).

10. Use of the changeover valve (10), according to one of the preceding claims, for mixer units on bathtubs for the purpose of changing over the water stream between bathtub outlet (22) and shower outlet (24).

## Revendications

1. Vanne de déviation à rappel automatique, pour dévier d'une première sortie (22) vers une deuxième sortie (24) un milieu d'écoulement amené par une entrée (20), comprenant un clapet (34) disposé dans un boîtier (13) et mobile sous l'effet d'un organe d'actionnement (28) entre deux sièges (36, 38) associés aux deux sorties (22, 24), maintenu sous la pression de retenue provoquée par le milieu qui s'écoule respectivement dans l'une de deux positions finales, où il coopère avec les sièges de vanne (36, 38), et comprenant aussi des moyens de rappel (40, 42) pour le clapet (34) dans une position de repos en l'absence de la pression de retenue, caractérisée en ce que les moyens de rappel (40, 42) sont réalisés d'une manière telle que le clapet(34) prend, dans la position de repos, une position espacée des deux sièges (36, 38).

2. Vanne de déviation selon la revendication 1, caractérisée en ce que la position de repos du clapet (34) est plus proche du siège (38) associé à la deuxième sortie (24) que de celui (36) associé à la première sortie (22).

3. Vanne de déviation selon la revendication 2, caractérisée en ce qu'un espace annulaire (44), d'environ 1 mm est ménagé dans la position de repos entre le clapet (34) de vanne et le siège de vanne (38), associé à la deuxième sortie (24).

4. Vanne de déviation selon l'une des revendications précédentes, caractérisée en ce que le clapet (34) comporte deux corps ou cônes, disposés sur un poussoir commun (32).

5. Vanne de déviation selon l'une des revendications précédentes, caractérisée en ce que les moyens de rappel (40, 42) comportent au moins un ressort.

6. Vanne de déviation selon la revendication 5, caractérisée en ce que les moyens de rappel (40, 42) comportent deux ressorts,à effets opposés.

7. Vanne de déviation selon la revendication 6, caractérisée en ce que les ressorts (40, 42) sont des ressorts à boudin sollicités en compression.

8. Vanne de déviation selon la revendication 7, caractérisée en ce que les ressorts (40, 42) présentent des caractéristiques élastiques différentes.

9. Vanne de déviation selon l'une des revendications 6 à 8, caractérisée en ce que la caractéristique d'au moins l'un des ressorts (42) est réglable à l'aide de moyens de réglage (46, 48).

10. Utilisation de la vanne de déviation (10) selon l'une des revendications précédentes, pour des robinetteries de mélangeurs sur des baignoires, afin de dévier le courant d'eau entre la sortie de la baignoire (22) et la sortie de la douche(24).
